# DEMANDE DE BREVET EUROPEEN

(11) **EP 1 026 715 A1**
(43) Date de publication de la demande: **09.08.2000**
(21) Numéro de dépôt: 98403136.9
(22) Date de dépôt: 11.12.1998
(51) Int. Cl.: H01H 47/32

(54) **Dispositif de commande pour bobine d'électroaimant**

(71) Demandeur: Schneider Electric Industries SA, 92500 Rueil-Malmaison (FR)
(72) Inventeur: Gousset, Alain, 92000 Nanterre (FR); Guermeur, Yves, 27000 Evreux (FR)

(57) **Abrégé**

Dispositif destiné à commander une bobine appartenant à un électreaimant, par exemple dans un appareil du genre contacteur.

Une alimentation à découpage 14 présente un enroulement S1 alimentant un circuit de commande 15 et un autre enroulement S2 disposé avec un interrupteur T2 aux bornes de la bobine. L'interrupteur T2 est piloté par le circuit de commande pour alimenter la bobine dans la phase de maintien à partir de l'alimentation à découpage. Il en résulte une diminution des perturbations en phase de maintien.

## Description

La présente invention concerne un dispositif de commande pour bobine d'électroaimant, comprenant une source de tension continue ou alternative redressée, un interrupteur placé en série avec la bobine et piloté par un circuit de commande pour déterminer l'alimentation de la bobine à partir de la source de tension, le circuit de commande étant lui-même alimenté par l'intermédiaire d'un organe d' alimenation relié à la source de tension.

Un tel dispositif doit permettre d'alimenter la bobine dans une phase dite d'appel, c'est-à-dire en vue de fermer le circuit magnétique de l'électroaimant, et dans une phase dite de maintien, c'est-à-dire en vue de maintenir fermé le circuit magnétique.

Un dispositif permettant d'alimenter la bobine dans une phase d'appel au moyen d'un courant régulé par action du circuit de commande sur l'interrupteur est décrit dans le document FR-2 748 167. Le courant est surveillé par le circuit de commande au moyen d'une résistance en série avec la bobine et il est régulé dans la phase d'appel et dans la phase de maintien du fait que le circuit de commande module des impulsions sollicitant l'interrupteur. On observe que la connexion directe de la bobine avec la source de tension engendre des perturbations de ligne particuliérement fâcheuses lorsque cette source est le réseau alternatif.

L'invention a pour but de réduire les perturbations de ligne dans la phase de maintien d'un dispositif de commande du type décrit, par une modification du mode d'alimentation de la bobine dans cette phase et par des dispositions corrélatives du circuit de commande et de son organe d'alimentation.

Selon l'invention, l'organe d'alimentation est une alimentation à découpage présentant:
- un premier enroulement alimentant le circuit de commande de l'interrupteur série,
- un deuxième enroulement disposé avec un deuxième interrupteur aux bornes de la bobine, le deuxième interrupteur étant piloté par le circuit de commande pour que la bobine soit alimentée par l'alimentation à découpage dans la phase de maintien.

Par l'adaptation d'impédance ainsi réalisée de la bobine vis-à-vis de la source de tension grâce à l'alimentation à découpage, on réduit d'une part les perturbations de ligne et en conséquence le dimensionnement du filtre d'entrée et l'on diminue d'autre part la surtension de bobine et le niveau requis de l'organe de protection correspondant.

De préférence, l'alimentation à découpage est une alimentation de type flyback autooscillant, qui comprend un troisième enroulement relié via un optocoupleur à la borne de commande du deuxième interrupteur. Elle peut avantageusement comprendre un quatrième enroulement relié via un optocoupleur à la borne de commande d'un troisième interrupteur, lequel troisième interrupteur est en série avec la bobine, tandis que le deuxième interrupteur et le deuxième enroulement sont disposés aux bornes de l'ensemble bobine - troisième interrupteur.

La description est faite ci-après d'un mode de réalisation non limitatif de l'invention, en regard des dessins annexés.

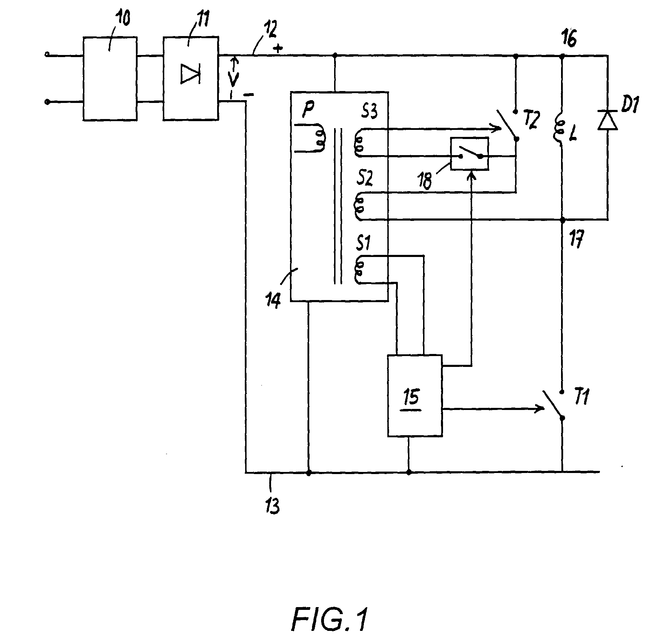

La figure 1 représente le schéma d'un dispositif de commande conforme à l'invention.
La figure 2 montre le schéma d'un mode de réalisation préféré.
La figure 3 représente un détail du dispositif de la figure 2.

Le dispositif de commande représenté est destiné à commander une bobine L appartenant à un électroaimant, par exemple dans un appareil du genre contacteur. Il est alimenté à partir d'une source de tension alternative ou continue, présentement à partir d'un réseau alternatif via un filtre 10 et un pont redresseur 11 délivrant une tension redressée V entre un conducteur positif 12 et un conducteur négatif 13. Il comprend une alimentation à découpage 14 de type flyback autooscillant présentant un enroulement primaire P connecté aux conducteurs 12,13 et plusieurs enroulements secondaires S1,S2,S3. L'enroulement S1 est relié à un circuit de commande 15 pour alimenter celui-ci et le rôle des enroulements S2 et S3 sera expliqué plus loin.

La bobine L est disposée entre les conducteurs 12,13, en série avec un interrupteur électronique T1 situé vers le conducteur négatif 13 et piloté par le circuit de commande 15. Selon les cas, l'interrupteur T1 bloque ou autorise le passage du courant dans la bobine L ou bien peut moduler ce courant par impulsions. Aux bornes 16,17 de la bobine L sont disposés d'une part une diode D1 de récupération, d'autre part un interrupteur électronique T2 en série avec l'enroulement S2. Le pilotage de l'interrupteur T2 est assuré par le circuit de commande 15 à l'aide d'un organe à commande isolée 18 tel qu'un optotransistor en série avec l'enroulement S3 ; de cette manière est assurée une commande flouante de T2. Les interrupteurs indiqués sont de tout type approprié, par exemple des transistors à commande MOS ou des composants IGBT.

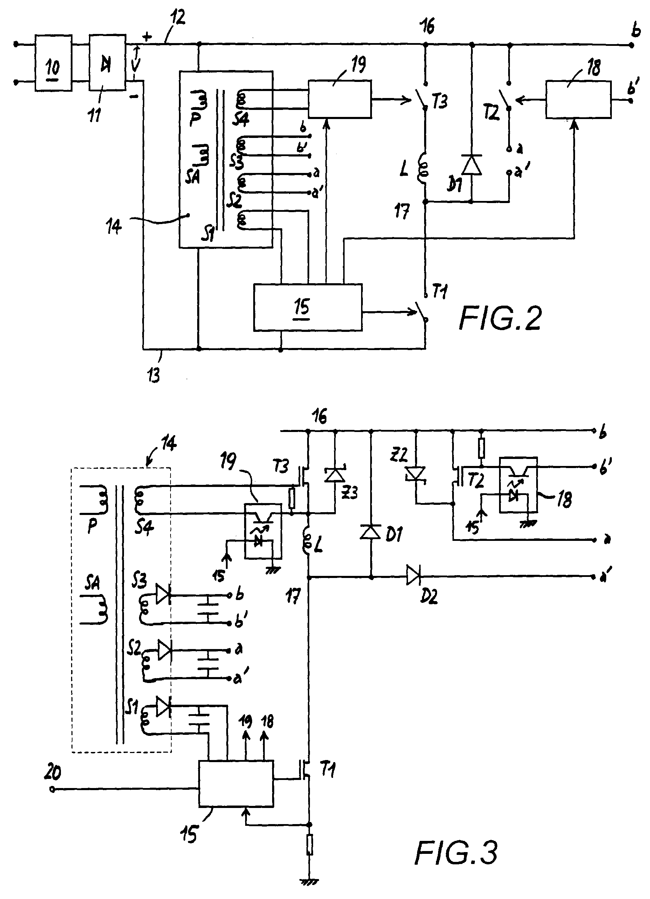

Dans le mode de réalisation représenté figure 2, un troisième interrupteur T3 est disposé en série avec la bobine L vers le conducteur positif 12, tout en étant piloté à partir du circuit de commande 15 par un organe à commande isolée 19 tel qu'un optotransistor en série avec un enroulement secondaire S4 de l'alimentation à découpage 14. Les bornes des enroulements S2 et S3 ont été désignées par a,a' et b,b' pour simplifier le dessin. L'ensemble formè par le transistor 12 et son enroulement associé S2 est connecté aux bornes 16,17 de l'ensemble formé par l'interrupteur T3 et la bobine L.

Sur la figure 3 sont représentés plus en détail quelques éléments du dispositif. Des organes de protection tels que des diodes Zener Z2,Z3 sont disposés en parallèle aux transistors T2,T3 et une diode D2 est située entre la borne a' et la borne 17 de la bobine. Une borne 20 est par ailleurs connectée au circuit de commande 15 pour en permettre la mise en oeuvre par un signai de bas niveau.

Le dispositif décrit fonctionne comme suit.

La marche du dispositif, en vue de fermer le circuit magnétique de l'électroaimant, est déterminée par un interrupteur marche-arrêt non indiqué ou par un signal adressé à la borne 20. La tension continue redressée V est appliquée au primaire P de l'alimentation à découpage flyback 14. Les transistors T1 et T3 sont rendus passants par le circuit de commande 15 lorsque la tension V dépasse un seuil déterminé et la bobine est alors alimentée par le courant d'appel ; le niveau de ce courant est régulé par modulation d'impulsions par le circuit 15 agissant sur T1. Lorsque le circuit magnétique de l'électroaimant est fermé, ce qui peut être traduit par une temporisation fournie par le circuit 15, celui-ci bloque le transistor T1 et rend passant le transistor T2 via 'optocoupleur 18. Il en résulte que la bobine L est désormais alimentée sous tension constante, pendant toute la durée de la phase de maintien, à partir de l'enroulement secondaire S2. La régulation ainsi assurée découle directement de l'utilisation de l'alimentation à découpage par ailleurs prévue pour alimenter le circuit 15 et le transistor T3 et engendre une tension de bobine plus faible à la retombée et donc un moindre dimensionnement de la diode Zener correspondante et du filtre 10 situé en amont.

Lorsque la tension du réseau tombe en dessous d'un seuil, le circuit de commande bloque l'optocoupleur 18 associé au transistor T2, qui se bloque à son tour, et la diode Z2 absorbe la surtension engendrée à la coupure du circuit. Quand l'interrupteur marche-arrêt ou le signal à la borne 20 commute pour commander l'arrêt du dispositif, le circuit de commande 15 bloque loptotransistor 19 et T3 se bloque pour entraîner une ouverture rapide du circuit magnétique de l'électroaîmant.

## Revendications

1. Dispositif de commande à phase d'appel et phase de maintien pour bobine d'électroaimant, comprenant une source de tension continue, un premier interrupteur (T1) placé en série avec la bobine (L) et piloté par un circuit de commande (15) pour déterminer l'alimentation de la bobine à partir de la source de tension, le circuit de commande étant alimenté par l'intermédiaire d'un organe d'alimentation relié à la source de tension,
*caractérisé par le fait que* l'organe d'alimentation est une alimentation à découpage (14) présentant:
- un premier enroulement (S1) alimentant le circuit de commande (15) du premier interrupteur (T1),
- un deuxième enroulement (S2) disposé avec un deuxième interrupteur (T2) aux bomes de la bobine, le deuxième interrupteur étant piloté par le circuit de commande (15) pour que la bobine soit alimentée par l'alimentation à découpage (14) dans la phase de maintien.

2. Dispositif de commande selon la revendication 1, *caractérisé par le fait que* l'alimentation à découpage (14) est une alimentation de type flyback autooscillant.

3. Dispositif de commande selon la revendication 1, *caractérisé par le fait que* l'alimentation à découpage (14) comprend un troisième enroulement (S3) relié via un optocoupleur (18) à la borne de commande du deuxième interrupteur (T2).

4. Dispositif de commande selon la revendication 1, *caractérisé par le fait que* l'alimentation à découpage (14) comprend un quatrième enroulement (S4) relié via un optocoupleur (19) à la borne de commande d'un troisième interrupteur (T3), lequel troisième interrupteur est en série avec la bobine (L), tandis que le deuxième interrupteur (12) et le deuxième enroulement (52) sont disposés aux bomes de l'ensemble bobine (L) - troisième interrupteur (T3).
